# EUROPEAN PATENT APPLICATION

(11) **EP 4 775 455 A1**
(43) Date of publication of application: **15.07.2026**
(21) Application number: 25151640.7
(22) Date of filing: 14.01.2025
(51) Int. Cl.: B60R 11/04, G03B 17/55, H04N 23/51, H04N 23/52

(54) **CAMERA FOR A MOTOR VEHICLE WITH SPECIFIC IR-LENS HEATER, AS WELL AS MOTOR VEHICLE**

(71) Applicant: Connaught Electronics Ltd., County Galway H54 Y276 (IE)
(72) Inventor: Mcgloin, Padraig, Tuam, H54 Y276 (IE)
(74) Representative: Jauregui Urbahn, Kristian

(57) **Abstract**

The invention relates to a camera (4) for a motor vehicle (1), having a housing (9), the housing (9) delimiting a receiving space (12) in which a lens module (16) of the camera (4) is arranged in certain regions, the camera (4) having a longitudinal axis (A), and having a heater for heating the lens module (16), the heater being an IR heater (15).

## Description

An aspect of the invention relates to a camera for a motor vehicle. The camera comprises an exterior housing or a housing. A receiving space of the camera is bounded by this housing. A lens module of the camera and a circuit board of the camera are arranged in the receiving space. Moreover, the camera comprises a heater for heating the lens module.

Cameras arranged in a motor vehicle are known in diverse configuration. In this context, it is known that cameras are formed and arranged for environmental capture of the motor vehicle. However, cameras can moreover also be employed for the capture of an interior space of the vehicle and are correspondingly arranged there. In this context, cameras are exposed to very different influences, which they have to withstand. This in particular relates to severe temperature fluctuations and/or severely fluctuating environmental influences. Moreover, cameras are also exposed to mechanical stresses due to the vibrations in moving the vehicle, which they have to permanently withstand. In this context, it is then in particular also a requirement to still be able to be highly functionally operated under these conditions and to allow sufficiently good image captures, which can then be provided to driver assistance systems, and it is evaluated if and optionally how a driver assistance system acts, based on this image information, respectively.

In such extremely compactly constructed cameras for a motor vehicle, it is known that an exterior housing is formed of separate housing parts, a housing top part and a housing bottom part. These housing parts are assembled and form a receiving space for further components, in particular a lens module and at least one circuit board, in the interior.

Heaters for such cameras, in particular for heating the lens modules, are also known. Thereto, it may for example be made reference to DE 10 2015 111 281 A1 and DE 10 2015 116 926 A1. Similarly, a camera for a motor vehicle with a heater for a lens is for example known from US 2020/0314311 A1. Further, it is provided that the heater itself comprises a ring, which directly abuts on a rear side of a lens to be able to heat it. Strips protrude from this ring, which is arranged in the lens module, which are laid on a housing inner side in axial or stepped manner and connected to electrical contacts on a circuit board. The ring is formed integrally with the strips.

### DE 10 2021 113 714 A1 discloses a camera with a specific lens heater.

In compact cameras in the motor vehicle technology, a sharp image capture is particularly important. Thereby, it is also important that the optical path in the camera, which forms between an image sensor of the camera and at least one lens of the camera, can be kept very clean.

In these heaters, the contacting is disadvantageous. Thereby, heating the lens module can only be possible in restricted manner on the one hand, on the other hand, interfaces, at which electrical contacts are connected to each other, can be impaired. Thereby, the electrical energy transfer from an energy source to the heater is also optionally impaired. In the case of the heaters as disclosed above, cables must be present and must also be routed around the lens module itself. As a result, installation space is required and the lenses of the lens module are impaired.

It is the object of the present invention to provide a camera and a motor vehicle with such a camera, in which improved heating of a lens module of the camera is allowed.

This object is solved by a camera and a motor vehicle according to the independent claims.

The heater is an IR heater. This lens heater is therefore an infrared heater. Such a specific lens heater, which is intended for heating at least one lens of the lens module, therefore also works without contact. This means that the lens heater is not in direct contact with a lens in order to heat it. An infrared heater therefore enables a variety of configurations in terms of installation space and the arrangement of components in the camera. This also allows the camera to be built more compactly and the entire heating scenario to be designed more efficiently. Furthermore, it has also been shown that heating with infrared radiation is more efficient, which means in particular that the heating process can be faster and also more locally specified. This means that individual lenses of the lens module can be heated as required.

In an embodiment, the infrared heater has a carrier. The carrier is arranged coaxially to the lens module. This means that a longitudinal axis of the lens module corresponds to the longitudinal axis of the carrier. Such a positionally specific arrangement further improves the compact design and makes the effectiveness of the infrared radiation for heating the lenses of the lens module particularly advantageous. In particular, it is possible in this context to enable a particularly simple beam path of the infrared radiation from the infrared heater to the lenses of the lens module. Radiation losses and/or undesirable strong heating of other components of the camera is thereby avoided.

In an embodiment, the infrared heater has a support that has a tubular piece. The tubular piece is arranged coaxially with the lens module. The tubular piece in its design as a hollow cylinder with an axially continuous hole is advantageous in that the coaxial arrangement with the lens module is particularly simple and light that is incident from the surroundings of the camera into the lens module and is intended to be guided by the lens module to an imager of the camera is not impaired as a result. This is because the light guided by the lens module can then also pass through the tube piece unhindered and reach a camera imager arranged in the beam path behind the tube piece unhindered. Therefore, such a tubular piece with the specific positional arrangement supports the above-mentioned advantages to a particular degree. This is because, in addition to the compact design of the camera, it also enables a particularly locally specific and advantageous positioning of at least one IR transmitter unit, i.e. an infrared transmitter unit of the infrared heater.

In an embodiment, the carrier has a collar that extends radially further outwards than the tubular piece. This radial arrangement is to be seen in relation to the longitudinal axis of the carrier. Such a specific collar with a geometric lateral extension in this respect creates an overall carrier that can also be positioned mechanically stable in the camera, in particular also axially. In addition, such a collar, which is virtually a widened bead compared to the tubular piece, provides a partial element of the carrier which is also better suited for accommodating further components of the infrared heater. On the one hand, such a collar is mechanically more stable and larger in terms of surface area, so that other components of the infrared heater can also be positioned on it. In addition, the collar can also serve as a mechanical contact element, in particular as an axial stop, so that the axial position of the carrier can be easily adjusted. In particular, the axial position of the carrier in relation to the lens module can be set easily and precisely. Likewise, the axial position of the carrier in relation to a separate imager of the camera, which is located in the axial direction of the lens module and the carrier, preferably in line with it, can be individually and very precisely adjusted. In particular, this geometric design of the carrier also enables fixed positioning and thus a stable fit on a housing part of the camera housing.

In an embodiment, at least one IR transmitter unit, i.e. an infrared transmitter unit of the infrared heater, is arranged on the carrier. This infrared transmitter unit is arranged in particular on the collar of the carrier. The infrared transmitter unit is in particular an IR diode, i.e. an infrared diode.

In an embodiment, several infrared transmitter units are arranged on the carrier, in particular on the collar. In an embodiment, at least three such infrared transmitter units are arranged on the carrier, in particular on the collar. In a direction of rotation around a longitudinal axis of the carrier, these multiple infrared transmitter units are preferably arranged equidistant from one another. Such a multiple number of infrared emitter units enables a further improved heating process of the lens module. Greater heating energies on the one hand and more locally specific heating zones on the other can be generated more effectively. It is also advantageous that when the radiation cones of the infrared radiation from the multiple infrared transmitter units are superimposed on the lens, a radiation surface is generated that heats the entire lens, in particular very evenly and homogeneously, if necessary.

It is advantageous if the infrared transmitter units can be controlled individually. The camera can have a control unit for this purpose. Each infrared transmitter unit can then be activated and deactivated individually and independently of another infrared transmitter unit. The intensity of the infrared radiation can then also be set individually for each infrared transmitter unit. In this way, heating processes with infrared radiation can be particularly individualized and adapted to the respective situation.

In an embodiment, the at least one infrared transmitter unit is arranged on an upper side of the carrier facing away from the lens module, in particular on an upper side of the collar. The carrier, in particular the collar, has a radiation channel with which the infrared radiation emitted by the infrared transmitter unit can be guided into the interior of a module housing of the lens module that accommodates the lens. Such a structure further enhances the compactness of the infrared heater and therefore of the entire camera. By arranging an infrared transmitter unit and providing such a radiation channel, the emitted infrared radiation can be directed and/or bundled into the interior of the module housing. This enables particularly targeted and directed infrared radiation, which is also particularly advantageous for heating at least one specific lens of the lens module.

In particular, the infrared heater is intended to heat an outer lens of the lens module. The outer lens is the lens that is closest to the environment of the camera or that is in contact with the environment of the camera and is therefore directly exposed to corresponding influences. In an embodiment, the radiation channel can be a continuous hole in the carrier, in particular the collar. This radiation channel can be oriented with its longitudinal axis parallel to the longitudinal axis of the carrier.

In an embodiment, the collar can be designed as a ring. It can have a casing wall oriented parallel to the longitudinal axis. It is also possible that the collar is not designed as a hollow cylindrical ring, but as a hollow truncated cone. In such an embodiment, the casing wall of the collar is then not completely parallel to the longitudinal axis of the carrier, but inclined to it. It is then possible that an infrared transmitter unit, in particular with a circuit board, is arranged on this inclined casing wall. A radiation channel can then also be formed in the collar in such an embodiment example. It can be oriented parallel to the longitudinal axis of the carrier or inclined to it.

In an embodiment, a circuit board is arranged on the collar, on which an infrared transmitter unit of the infrared heater and/or a power supply unit of the infrared heater is or are arranged. It is thus provided that the infrared heater has at least one circuit board of its own on which the at least one infrared transmitter unit is arranged.

The camera can also preferably have a separate and additional circuit board. An imager is preferably arranged on this additional circuit board. This further circuit board is arranged in particular at a distance from the carrier and at a distance from the entire infrared heater inside the housing of the camera.

In an embodiment, the infrared heater has at least one infrared filter, i.e. an IR filter. The infrared filter is arranged on the carrier, in particular directly on it. An infrared filter advantageously ensures that the infrared radiation from the infrared heater cannot reach specific areas inside the housing of the camera and is filtered out accordingly. The infrared filter is particularly advantageous in preventing the infrared radiation from the infrared heater from reaching the camera's imager. The infrared filter thus provides a positional arrangement that is intended to protect the imager from the infrared radiation of the infrared heater, i.e. the at least one infrared transmitter unit. In an embodiment, the infrared filter is arranged in series in the axial direction between the lens module and the image sensor. In an embodiment, the infrared filter is therefore positioned in the beam path between the lens module and the imager.

In an embodiment, the IR filter is arranged on the carrier in such a way that an opening in the carrier is covered with the infrared filter. The opening is intended to guide light from the lens module to an imager of the camera or to allow light to pass through. In particular, the opening is arranged coaxially to the longitudinal axis of the lens module. In particular, the imager is arranged coaxially to the opening in the carrier. As this opening is completely covered by the IR filter, it is possible in a very efficient manner to filter out infrared radiation that is emitted into the interior of the module housing of the lens module and is possibly reflected there in the direction of the opening and to prevent it from reaching the imager behind it via the opening. The passage of infrared radiation generated by the infrared heater through this opening to the image sensor is therefore blocked or filtered out.

In an embodiment, the infrared filter is at least partially axially recessed in the carrier, in particular the collar. This supports the compact design and achieves a mechanically stable positioning and mounting of the infrared filter on the carrier.

In an embodiment, the carrier extends in particular with a ring piece or a tubular piece, which has already been explained above, into a continuous receptacle in a housing part of the camera housing. This supports an axially compact design and enables a mechanically stable and fixed positioning of the carrier on the housing part. In particular, this carrier is screwed into the receptacle of the housing part with the aforementioned ring piece, i.e. in particular the tubular piece. For this purpose, the ring piece has a thread on the outside and the receptacle has a mating thread. In an embodiment, it is provided that the lens module extends axially into the receptacle in some areas. This also supports the compact design of the camera and achieves a mechanically stable positioning of the lens module on the housing, in particular this front part of the housing. In particular, this lens module is screwed into this receptacle of the front housing part.

In an embodiment, the housing of the camera is formed by two separate housing parts. This relates to a front housing part and a rear housing part in the axial direction of the camera, which corresponds to the main radiation direction of the camera. The two housing parts can be detachably connected to each other. They can be screwed together. In particular, the lens module is screwed into this mount. For this purpose, a thread can be formed on an outer side of a module housing of the lens module, which engages with a mating thread on the inside of the mount and thus mechanically couples and accordingly enables the screwing movement.

In an embodiment, an inner side of a module housing of the lens module is provided with a material that interacts with infrared radiation. In particular, this material is a black material. In particular, it is applied as a coating to the inside of the module housing. In particular, the material is applied by powder coating. In an embodiment, the module housing can be made of metal, in particular aluminum. The powder coating of the preferably black material can then be applied to the surface of the aluminum, at least in certain areas. The heating process for heating at least one lens of the lens module is advantageously supported by such a material design of the module housing. This enables particularly efficient heating of at least one lens of the lens module.

In an embodiment, the camera has an adjustment unit for adjusting the position of at least one lens of the lens module. In this case, the adjustment is enabled relative to an imager of the camera as intended. The adjustment unit is in particular an IR adjustment unit, i.e. an infrared adjustment unit.

In particular, it is envisaged that the infrared adjustment unit is formed by the infrared heater. This provides an infrared system in the camera that is multifunctional and is used multifunctionally. On the one hand, the infrared radiation of this infrared system can be used specifically and as intended for heating at least one lens of the lens module. On the other hand, this infrared radiation of the infrared system can be used for the positional adjustment of at least one lens of the lens module. It is therefore possible for this infrared system to be operated in a heating mode or in an adjustment mode. These modes can be set by a control unit of the camera.

In an embodiment, the infrared adjustment unit has several infrared transmitter units. These infrared transmitter units are preferably individually controllable. This allows extremely precise and localized heat generated by the infrared radiation to be provided at specific points of a lens and/or a fastening structure with which the lens is arranged in the module housing of the lens module. This enables local, individual heating of the lens and/or this fastening material of the fastening structure in a very targeted manner, whereby an axial change of a lens in the lens module and/or tilting of the lens relative to this longitudinal axis of the lens module can be easily adjusted. This also makes it particularly advantageous to be able to cause individual positional changes and thus corresponding adjustments by contactless action on the lens and/or the fastening material for fastening the lens in the module housing.

A further aspect of the invention relates to a camera for a motor vehicle. The camera has a housing. The housing delimits a recording space in which a lens module of the camera is arranged, at least in certain areas. The camera has a longitudinal axis. The camera also has an adjustment unit for adjusting the position of at least one lens of the lens module, in particular relative to an imager of the camera. The adjustment unit is in particular an infrared adjustment unit. Infrared radiation enables contactless action on a lens of the lens module to be adjusted in position and/or on fastening material with which the lens is fastened in a module housing of the lens module. This enables particularly precise position adjustment of a lens. There is no direct mechanical impact, which means that damage to the lens and/or the fastening material can be better avoided.

Embodiments of the above-mentioned first aspect relating to a camera, in particular with respect to the adjustment unit, are to be regarded as advantageous embodiments of this further independent aspect relating to the further camera.

A further aspect of the invention relates to a motor vehicle with a camera according to an aspect mentioned above or an advantageous embodiment thereof. The camera may also be referred to as a motor vehicle camera. It is therefore intended for installation and use in or on a motor vehicle.

A further aspect of the invention relates to a motor vehicle with a camera according to the above mentioned aspect or an advantageous embodiment thereof. The camera can be installed at the motor vehicle for capturing an environment of the motor vehicle. However, it can also be a camera, which captures the interior space or the passenger compartment of the motor vehicle.

The camera can be a constituent of an electronic vehicle guidance system of the motor vehicle.

Embodiments of an aspect of the invention are embodiments of the other aspect of the invention, too.

Further features of the invention are apparent from the claims, the figures and the description of figures. The features and feature combinations mentioned above in the description as well as the features and feature combinations mentioned below in the description of figures and/or shown in the figures alone are usable not only in the respectively specified combination, but also in other combinations without departing from the scope of the invention. Thus, implementations are also to be considered as encompassed and disclosed by the invention, which are not explicitly shown in the figures and explained, but arise from and can be generated by separated feature combinations from the explained implementations. Implementations and feature combinations are also to be considered as disclosed, which thus do not comprise all of the features of an originally formulated independent claim. Moreover, implementations and feature combinations are to be considered as disclosed, in particular by the implementations set out above, which extend beyond or deviate from the feature combinations set out in the relations of the claims.

Below, embodiments of the invention are explained in more detail based on schematic drawings.

There show:
- Fig. 1: a schematic top view to an embodiment of a motor vehicle according to the invention with an embodiment of a camera according to the invention;
- Fig. 2: a schematic sectional view of an embodiment of a camera according to the invention; and
- Fig. 3: a schematic sectional view of an embodiment of an IR lens heater of a camera according to the invention.

In the figures, identical or functionally identical elements are provided with the same reference characters.

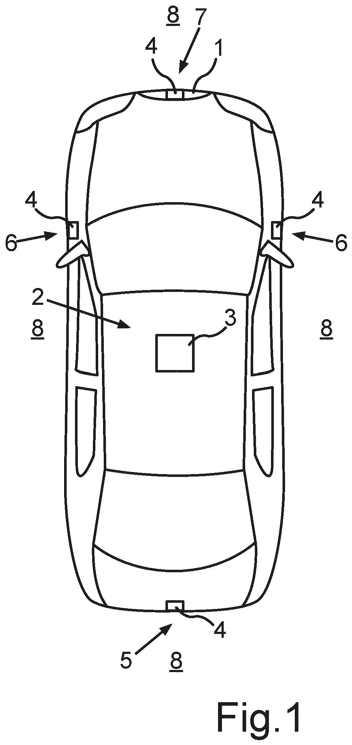

In Fig. 1, a motor vehicle 1 of the present invention is shown in a top view in an embodiment. Here, the motor vehicle 1 is formed as a passenger car. The motor vehicle 1 comprises an electronic vehicle guidance system or a driver assistance system 2. The driver assistance system 2 in turn comprises a control unit 3, which can for example be formed by an electronic controller of the motor vehicle 1. Moreover, the driver assistance system 2 comprises at least one camera 4. In the present embodiment, the driver assistance system 2 comprises four cameras 4, which are arranged distributed at the motor vehicle 1. Presently, one of the cameras 4 is arranged in a rear area 5, one of the cameras 4 is arranged in a front area 7 of the motor vehicle 1 and the remaining two cameras 4 are arranged in a respective lateral area 6, in particular in an area of the wing mirrors. Presently, the number and arrangement of the cameras 4 of the driver assistance system 2 are to be purely exemplarily understood.

Additionally or instead, at least one camera can also be provided, which is formed and arranged for capturing an interior space or a passenger compartment of the motor vehicle 1. The cameras are in particular installed such that they are assembled to an individual motor vehicle component. A motor vehicle component can for example be a bumper or an exterior mirror or a side trim. The motor vehicle component can for example also be a headliner or an interior trim or a cover of a steering wheel center or an interior mirror. The motor vehicle components are to be only exemplarily understood and alternative motor vehicle components can also be present. Thereby, it is only expressed that a motor vehicle component can be very diversely formed with respect to positional arrangement and material configuration.

In an embodiment, an environmental region 8 of the motor vehicle 1 can be captured by the cameras 4. Preferably, the four cameras 4 are formed identical in construction. In particular, an image sequence or video data can be provided by the cameras 4, which describe the environmental region 8. This video data can be transferred from the cameras 4 to the control unit 3. By means of the control unit 3, a display device of the motor vehicle 1 not illustrated here can be controlled such that the video data of the cameras 4 can be displayed to the driver. Thus, the driver assistance system 2 serves for assisting the driver of the motor vehicle 1 in driving the motor vehicle 1. The driver assistance system 2 can for example be a so-called electronic rearview mirror or a parking assistance system or another system. It can also be formed in the interior for capturing a person, in particular a vehicle driver.

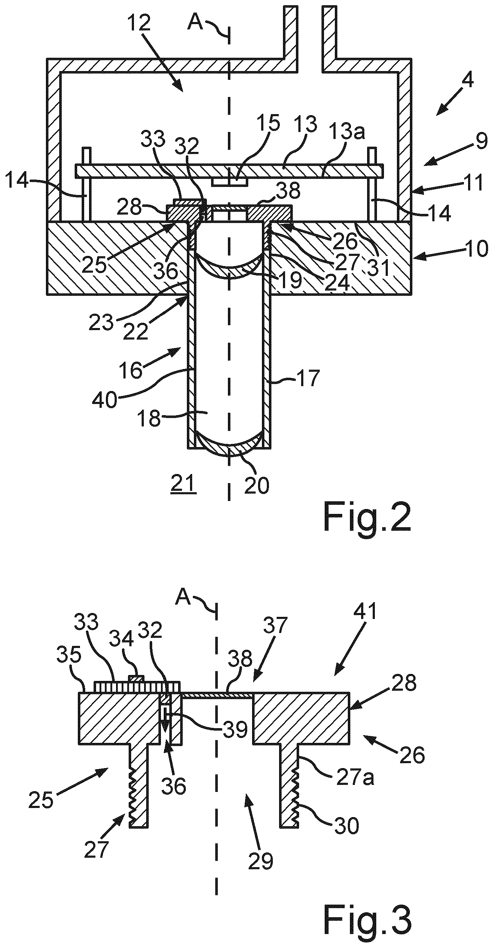

Fig. 2 shows a schematic longitudinal sectional view of an embodiment of a camera 4 according to the invention. The camera 4 has a housing 9. In this embodiment, the housing 9 has a multi-part structure. The housing 9 has a first housing part 10. The first housing part 10 is a front housing part with respect to a longitudinal axis A of the camera 4. In addition, the housing 9 has a further second housing part 11. The further housing part 11 is here a rear housing part in relation to the longitudinal axis A. The two housing parts 10 and 11 can, for example, be connected to each other by a detachable connection, such as a screw connection. A receiving space 12 is formed and delimited by the housing 9 and thus in this case the two housing parts 10 and 11. Electronic components and/or other components of the camera 4 are arranged in the receiving space 12. For example, at least one circuit carrier or a circuit board 13 is arranged in the receiving space 12. The circuit board 13 is shown here, by way of example and not exhaustively, with retaining elements 14 arranged on the front housing part 10.

This circuit board 13 can be referred to as the main circuit board. An imager 15 of the camera 4 is arranged on a surface 13a of the circuit board 13 facing the housing part 10. This imager 15 can also be referred to as an image sensor.

The camera 4 also has a lens module 16. The lens module 16 has a module housing 17. In this embodiment example, several lenses of the lens module 16 are arranged in an interior 18 of the module housing 17. Two lenses 19 and 20 are shown here by way of example, both in position and in geometry as well as in number. The lens 20 here represents an outer lens. This means that it is closest to an environment 21 of the camera, in particular that it is in contact with it with regard to the influences of the environment. The lens module 16 is here cantilevered outwards in some areas and is directly connected to the first housing part 10. For this purpose, it may be provided that the housing part 10 has a receptacle 22, which is in particular a continuous hole. The lens module 16 is inserted axially into this receptacle 22, at least in certain areas. In particular, it is mechanically fixed therein. This positioning can be provided by a screw connection, for example. For this purpose, a mating thread can be formed on an inner side 23 of the receptacle 22 and a thread can be formed on an outer side 24 of the module housing 17. In addition, the camera 4 has a heater for heating at least one lens 19 and/or 20. In the embodiment, this lens heater is an infrared heater 25. In the embodiment, the infrared heater 25 has a carrier 26. The carrier 26 is formed in one piece. In particular, it is made of metal. The carrier 26 can be shaped like a mushroom. In an embodiment, the carrier 26 is arranged with its longitudinal axis coaxial to the longitudinal axis A of the lens module 16. As an example, this longitudinal axis of the lens module 16 is formed here by the longitudinal axis A of the camera 4. As can also be seen in Fig. 2, the imager 15 is arranged on this longitudinal axis A, so that the lens module 16, the carrier 26 and thus the infrared heater 25 and the imager 15 are arranged in series with one another in the direction of this longitudinal axis A. The infrared heater 25 with the carrier 26 is arranged between the lens module 16 and the imager 15. As can be seen in Fig. 2, the carrier 26 is arranged on the housing part 10, in particular attached directly to it.

As can be seen in a schematic longitudinal sectional view in Fig. 3, the carrier 26 has an annular piece or a tubular piece 27. In addition, the carrier 26 has a collar 28 which is formed in one piece with the tubular piece 27 and is axially connected to it. In this case, the collar 28 protrudes laterally further outwards in the radial direction to the longitudinal axis A than the tubular piece 27. The carrier 26 has a continuous hole 29, which is completely continuous axially. As a result, the collar 28 is formed as a ring in the embodiment. A thread 30 is formed on an outer side 27a of the tubular piece 27. This thread 30 is the one already explained in Fig. 2 and with which the carrier 26 can be screwed into the holder 22.

As can also be seen in Fig. 2, the collar 28 preferably also forms an axial stop. With this collar 28, in one embodiment example the carrier 26 can be seated from above in the axial direction of the longitudinal axis A on an upper side 31, as shown in Fig. 2.

The infrared heater 25 also has at least one infrared transmitter unit 32. The infrared transmitter unit 32 is here an infrared diode. Preferably, the infrared heater 25 has several, preferably at least three, such infrared transmitting units 32. These are preferably arranged equidistant from one another in the direction of rotation about the longitudinal axis A.

As can be seen in Fig. 3, the infrared transmitter unit 32 is arranged on a circuit board 33. The heating circuit board 33 is therefore also a component of the infrared heater 25. It is possible that an energy supply unit 34 is also arranged on this circuit board 33. Both the position and the design of the energy supply unit 34 in Fig. 3 are merely schematic and not exhaustive. The energy supply unit 34 can, for example, also be used to supply the infrared transmitter unit 32 with energy.

As can be seen, in an embodiment, the circuit board 33 sits on an upper side 35 of the collar 28 that faces away from the tubular piece 27 in the axial direction. In the embodiment, the collar 28 has a radiation channel 36. This radiation channel 36 is here in particular a continuous bore through the collar 28. Infrared radiation, which is emitted by the infrared transmitter unit 32 in the direction of the lens module 16, is thus guided in this radiation channel 36. As a result, the infrared radiation is specifically emitted in the direction of the interior 18 of the lens module 16. In the embodiment, this radiation channel 36, viewed in a radial direction with respect to the longitudinal axis A, is offset inwards with respect to the tubular piece 27. The longitudinal axis of the radiation channel 36 can preferably run parallel to the longitudinal axis A. As can be seen in Fig. 3, the infrared transmitter unit 32 extends into the radiation channel 36.

Fig. 3 also shows that the carrier 26 has an opening 37. This is an opening 37 facing the imager 15. This opening 37 is covered here by an infrared filter 38 of the infrared heater 25, in particular completely covered. The infrared filter 38 is arranged here in the axial direction of the longitudinal axis A in series with the lens module 16 on the one hand and the imager 15 on the other. The infrared filter 38 ensures that infrared radiation emitted by the infrared transmitter unit 32 does not reach the imager 15. The infrared radiation 39 emitted here in the embodiment example according to Fig. 3 in the direction of the lens module 16 is thus emitted away from the imager 15. Nevertheless, the infrared radiation 39 can be partially reflected in the direction of the opening 37 by reflection in the interior 18 of the module housing 17. The infrared filter 38 is provided to prevent the radiation from hitting the imager 15. In particular, it is provided that at least one inner side 40, as shown in Fig. 2, of the module housing 17 is coated with a black material, in particular powder-coated.

It may also be provided that the surface of the carrier 26 is coated with a black material, at least in certain areas, in particular completely. The base material of the carrier 26 is preferably aluminum, to which this coating can then be applied.

In an embodiment, the camera 4 has an adjustment unit 41. The adjustment unit 41 is designed as intended for adjusting at least one lens 19 and/or 20 of the lens module 16. In particular, this is intended to enable a lens 19 and/or 20 to be adjusted in position, especially with respect to the imager 15. The adjustment unit 41 is here in particular an infrared adjustment unit 41. It is preferably formed by the components formed by the infrared heater 25. In particular, several infrared transmitter units 32 are provided here. The infrared transmitter units 32 can each be controlled individually and independently of one another by a control unit of the adjustment unit 41. Said control unit can also be a control unit of the infrared heater 25.

## Claims

1. Camera (4) for a motor vehicle (1), having a housing (9), the housing (9) delimiting a receiving space (12) in which a lens module (16) of the camera (4) is arranged in certain regions, the camera (4) having a longitudinal axis (A), and having a heater for heating the lens module (16),
**characterized in that**
the heater is an IR heater (15).

2. Camera (4) according to claim 1,
**characterized in that**
the IR heater (25) has a carrier (26) which is arranged coaxially with the lens module (16).

3. Camera (4) according to claim 1 or 2,
**characterized in that**
the IR heater (25) has a carrier (26) which has a tubular piece (27) which is arranged coaxially with the lens module (16).

4. Camera (4) according to claim 3,
**characterized in that**
the carrier (26) has a collar (28) which projects radially further outwards than the tubular piece (27).

5. Camera (4) according to claim 3 or 4,
**characterized in that**
at least one IR transmitter unit (32), in particular an IR diode, is arranged on the carrier (26), in particular on the collar (28).

6. Camera (4) according to claim 5,
**characterized in that**
a plurality of, in particular at least three, IR transmitter units (32) are arranged on the carrier (26), in particular on the collar (28), in particular are arranged equidistant from one another in the direction of rotation about a longitudinal axis (A) of the carrier (26).

7. Camera (4) according to one of the preceding claims 4 to 6,
**characterized in that**
the at least one IR transmitter unit (32) is arranged on an upper side (35) of the collar (28) facing away from the lens module (16), the collar (28) having a radiation channel (36) with which the IR radiation (39) emitted by the IR transmitter unit (32) can be guided in a targeted manner into the interior (18) of a module housing (17) of the lens module (16) accommodating lenses (19, 20).

8. Camera (4) according to one of the preceding claims 4 to 7,
**characterized in that**
a circuit board (33) is arranged on the collar (28), on which circuit board (33) at least one IR transmitter unit (32) of the IR heater (25) and/or an energy supply unit (34) of the IR heater (25) are arranged.

9. Camera (4) according to one of the preceding claims 2 to 8,
**characterized in that**
the IR heater (25) comprises an IR filter (38) which is arranged on the carrier (26).

10. Camera (4) according to claim 9,
**characterized in that**
the IR filter (38) covers an opening (37) in the carrier (26) through which light is guided from the lens module (16) to an imager (15) of the camera (4), in particular arranged coaxially to the opening (37), so that passage of IR radiation (39) from the IR heater (25) through the opening (37) is blocked.

11. Camera (4) according to one of the preceding claims,
**characterized in that**
the carrier (26), in particular with a ring piece (27), extends into a continuous receptacle (22) in a housing part (10) of the housing (2), in particular is screwed into it, and the lens module (16) extends into the receptacle (22) in some regions, in particular is screwed into it.

12. Camera (4) according to one of the preceding claims,
**characterized in that**
an inner side (40) of a module housing (17) of the lens module (16) is coated with a black material, in particular powder-coated, and/or the module housing (17) is made of aluminum.

13. Camera (4) according to one of the preceding claims,
**characterized in that**
a surface of the carrier (26) is coated with a black material, in particular powder-coated, and/or the carrier (26) is made of aluminum.

14. Camera (4) according to one of the preceding claims,
**characterized in that**
the camera (4) comprises an adjustment unit (41) for adjusting a position of at least one lens (19, 20) of the lens module (9), in particular relative to an imager (15) of the camera (4), wherein the adjustment unit (41) is an IR adjustment unit (41) and is formed by the IR heater (25).

15. Camera (4) for a motor vehicle (1), having a housing (2), the housing (2) delimiting a receiving space (12) in which a lens module (16) of the camera (4) is arranged in certain regions, the camera (4) having a longitudinal axis (A), and having an adjustment unit for adjusting a position of at least one lens (19, 20) of the lens module (16),
**characterized in that**
the adjustment unit is an IR adjustment unit (41).
